# EUROPÄISCHE PATENTSCHRIFT

(11) **EP 2 185 777 B1**
(45) Veröffentlichungstag und Bekanntmachung des Hinweises auf die Patenterteilung: **07.12.2011**
(21) Anmeldenummer: 08785791.8
(22) Anmeldetag: 02.09.2008
(51) Int. Cl.: E04F 13/08, F16B 13/04

(54) **DÄMMSTOFFDÜBEL**
INSULATION PLUG
CHEVILLE POUR MATERIAU D'ISOLATION

(30) Priorität: 11.09.2007 DE 102007043031
(43) Veröffentlichungstag der Anmeldung: 19.05.2010
(73) Patentinhaber: fischerwerke GmbH & Co. KG, 72178 Waldachtal (DE)
(72) Erfinder: RENZ, Jürgen, 72202 Nagold (DE)
(86) Internationale Anmeldenummer: PCT/EP2008/007146
(87) Internationale Veröffentlichungsnummer: WO 2009/033585

(56) Entgegenhaltungen:
- EP-A1- 1 248 000
- DE-A1- 19 500 064
- DE-U1- 20 021 311
- FR-A1- 2 738 879
- US-A- 4 452 023

## Beschreibung

Die Erfindung betrifft einen Dämmstoffdübel mit den Merkmalen des Oberbegriffs des Anspruchs 1.

Dämmstoffdübel dienen zur Befestigung von Dämmstoffplatten, -matten oder dgl. an einem Untergrund, beispielsweise an einer gemauerten oder betonierten Wand. Ein Dämmstoffdübel ist bekannt aus der europäischen Patentanmeldung EP 1 457 688 A1. Der bekannte Dämmstoffdübel weist einen rohrförmigen Schaft mit einem Halteteller an einem hinteren und einem Spreizbereich an einem vorderen Ende auf. Der Spreizbereich ist nach Art an sich bekannter Spreizdübel ausgebildet, er ist zur Verankerung des Dämmstoffdübels in einem Bohrloch im Untergrund durch Einbringen eines stiftförmigen Spreizelements, beispielsweise einer Schraube oder eines Nagels, aufspreizbar. Der Schaft des bekannten Spreizdübels weist eine Stauchzone auf, in der er dünnwandig ausgebildet ist und zwei wendelförmig umlaufende Hohlwülste aufweist. Durch Stauchen in der Stauchzone ist der bekannte Dämmstoffdübel axial verkürzbar, wenn sein Spreizbereich im Untergrund verankert ist. Dadurch ist es möglich, den Halteteller bündig oder auch etwas versenkt in die zu befestigende Dämmstoffplatte oder dgl. zu versenken.

Aufgabe der Erfindung ist, einen Dämmstoffdübel mit einer konstruktiv anders ausgeführten Stauchzone vorzuschlagen.

Diese Aufgabe wird erfindungsgemäß durch die Merkmale des Anspruchs 1 gelöst. In der Stauchzone weist eine Wand des rohrförmigen Schafts des erfindungsgemäßen Dämmstoffdübels Aussparungen auf. Dabei handelt es sich beispielsweise um Schlitze, deren Breite sich über ihre Länge ändern kann. Die Aussparungen unterteilen die Wand des Schafts des erfindungsgemäßen Dämmstoffdübels in der Stauchzone in Wandschalen, die axial hintereinander angeordnet sind und sich in Umfangsrichtung ein begrenztes Stück weit, normalerweise nicht weiter als 180°, erstrecken. Die axial hintereinander angeordneten Wandschalen sind durch Verformungsgelenke nach Art von Kniehebeln miteinander und mit dem Schaft verbunden. Die Verformungsgelenke sind Wandteile des Schafts des Dämmstoffdübels, die zwischen den Aussparungen stehen geblieben sind und an dem die Wand des Schafts durch Materialverformung definiert knickt. Durch Stauchen des Schafts des Dämmstoffdübels knicken die durch die Aussparungen gebildeten Wandschalen wie Kniehebel nach außen, so dass sich der Schaft axial verkürzt.

Die Erfindung ermöglicht einen Dämmstoffdübel mit einer vergleichsweise genau definierten Stauchzone und einer vergleichsweise genau definierten Stauchlänge ohne besonderen Aufwand, einfach durch Form und Anordnung der Aussparungen in der Stauchzone, die die Wandschalen und Verformungsgelenke begrenzen und bilden.

Eine Ausgestaltung der Erfindung sieht mindestens zwei Längsschlitze in der Wand des Schafts des Dämmstoffdübels in der Stauchzone vor, die axial in gleicher Höhe und in Umfangsrichtung gleich oder ungleich verteilt angeordnet sind. Die Längsschlitze begrenzen eine axiale Länge der Stauchzone und damit eine Stauchlänge, also die axiale Verkürzung des Schafts des Dämmstoffdübels beim Stauchen.

Eine Weiterbildung sieht Aufweitungen an den Enden der Längsschlitze vor. Die Aufweitungen können kreisförmig sein. Sie vermeiden ein Reißen der Wand des Schafts ausgehend von den Enden der Längsschlitze, wenn die Längsschlitze beim Ausknicken der Wandschalen in die Breite gezogen werden. Die Aufweitungen verkleinern mechanische Spannungen an den Enden der Längsschlitze bei einer Zugbeanspruchung in Umfangsrichtung, Spannungsspitzen an den Enden der Längsschlitze werden vermieden oder jedenfalls verringert.

Der Dänmstoffdübel gemäß der Erfindung sieht Schlitze in der Stauchzone des Schafts vor, die ellipsen- oder rautenförmig angeordnet sind. Im Bereich gedachter Halbachsen der Ellipse bzw. an Ecken der Raute sind die Schlitze unterbrochen, so dass an den genannten Stellen die Verformungsgelenke gebildet sind. Die Schlitze begrenzen und bilden die Wandschalen des Schafts des Dämmstoffdübels in der Stauchzone. Wie erwähnt können die Schlitze ihre Breite über ihre Länge ändern. In bevorzugter Ausgestaltung sind die ellipsen- oder rautenförmig angeordneten Schlitze mit den Längsschlitzen kombiniert, wobei die Längsschlitze eine gedachte lange Halbachse der Ellipse bzw. eine lange Mittellinie der Raute bilden.

Eine Ausgestaltung der Erfindung sieht die Anordnung der Stauchzone nahe dem Spreizbereich vor. Durch Verankerung im Untergrund ist der Spreizbereich ortsfest, nahe dem Spreizbereich ist eine axiale Verschiebung der Stauchzone beim Einbringen des stiftartigen Spreizelements in den Dämmstoffdübel kurz.

Eine bevorzugte Ausgestaltung der Erfindung sieht vor, dass die Aussparungen durch Häute verschlossen sind. Die Häute verhindern das Eindringen von Bohrmehl in den Schaft beim Setzen des Dämmstoffdübels, das eine Reibung zwischen dem stiftartigen Spreizelement und dem Dämmstoffdübel vergrößern und folglich das Einbringen des Spreizelements erschweren würde. Beim Ausknicken der Wandschalen reißen die Häute, sie behindern das Ausknicken nicht.

Die Erfindung wird nachfolgend anhand eines in der Zeichnung dargestellten Ausführungsbeispiels näher erläutert. Es zeigen:
- Figur 1: einen Dämmstoffdübel gemäß der Erfindung in perspektivischer Darstellung;
- Figur 2: eine Vergrößerung einer Stauchzone des Dämmstoffdübels aus Figur 1; und
- Figur 3: die Stauchzone aus Figur 2 in gestauchtem Zustand.

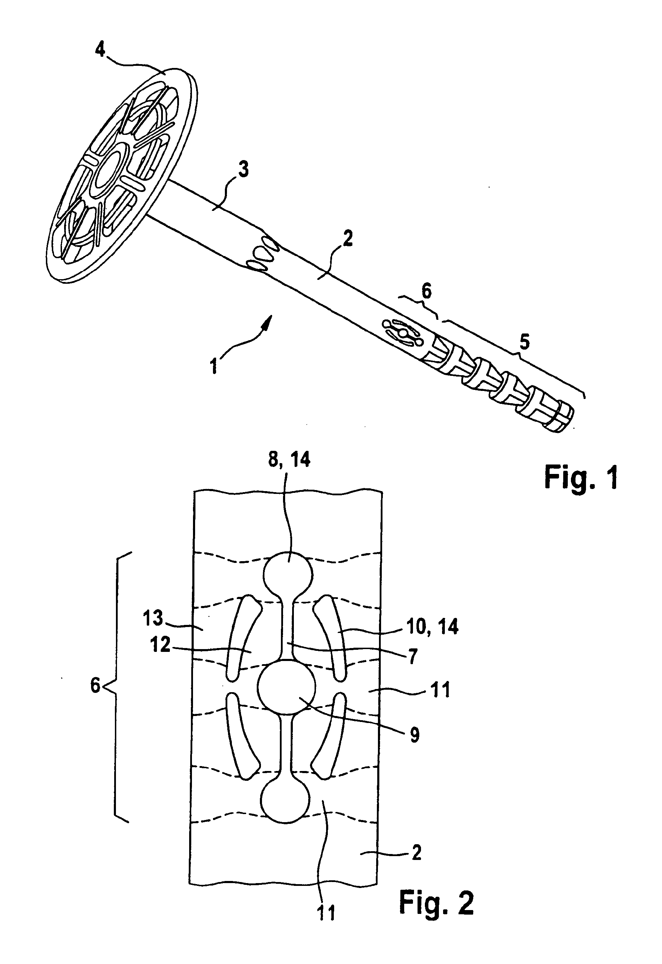

Der in Figur 1 dargestellte, erfindungsgemäße Dämmstoffdübel 1 dient zur Befestigung einer nicht dargestellten Dämmstoffplatte, -matte oder dgl. an einem ebenfalls nicht dargestellten Untergrund, beispielsweise einer gemauerten oder betonierten Wand. Der Dämmstoffdübel 1 ist in einem Stück durch Spritzgießen aus Kunststoff hergestellt. Er weist einen rohrförmigen Schaft 2 auf, der sich in einem hinteren Abschnitt 3 auf einen größeren Durchmesser zur Aufnahme eines Kopfs eines nicht dargestellten stiftartigen Spreizelements erweitert. Als Spreizelement ist insbesondere eine Nagelschraube vorgesehen, die an sich bekannt ist und hier nicht erläutert werden soll. An einem hinteren Ende weist der Dämmstoffdübel 1 einen Halteteller 4 auf.

Ein vorderer Abschnitt des Dämmstoffdübels 1 ist nach Art eines Spreizdübels als Spreizbereich 5 ausgebildet. Zur Verankerung des Dämmstoffdübels 1 in einem Bohrloch in dem nicht dargestellten Untergrund wird der Spreizbereich 5 durch Einbringen des nicht dargestellten stiftartigen Spreizelements in an sich bekannter Weise aufgespreizt.

Mit kurzem Abstand vom Spreizbereich 5 weist der Schaft 2 eine Stauchzone 6 auf, die in Figur 2 in größerer Darstellung gezeigt ist. In der Stauchzone 6 weist der Schaft 2 Aussparungen 7, 10 in Form von Schlitzen auf. Ein Längsschlitz 7 erstreckt sich über die Länge der Stauchzone 6. An beiden Enden geht der Längsschlitz 7 in kreisförmige Aufweitungen 8 über. Ein Mittelloch 9 im Längsschlitz 7 dient der Abstützung eines Kerns beim Spritzgießen des Dämmstoffdübels 1.

Um den Längsschlitz 7 herum sind vier weitere Schlitze 10 angeordnet, die sich - jedenfalls ungefähr - auf einer gedachten Ellipse befinden, auf deren gedachter großer Halbachse sich der Längsschlitz 7 befindet. Die Schlitze 10 erstrecken sich jeweils über etwas weniger als ein Viertel der gedachten Ellipse, also über etwas weniger als einen Quadranten. Die Schlitze 10 gehen nicht ineinander und nicht in den Längsschlitz 7 über, sondern es besteht jeweils ein Abstand zwischen den Enden der Schlitze 7, 10. Der Längsschlitz 7 und die ihn umgebenden Schlitze 10 sind auf einer gegenüberliegenden Seite des Schafts 2 noch einmal deckungsgleich vorhanden. Eine Wand des rohrförmigen Schafts 2 zwischen den Enden der Schlitze 7, 10 bildet Verformungsgelenke 11, an denen die Wand des Schafts 2 durch Materialverformung knicken kann. Die Schlitze 10 verbreitern sich in Richtung des Längsschlitz 7.

Die Schlitze 7, 10 teilen den Schaft 2 in der Stauchzone 6 in Wandschalen 12, 13, und zwar in innere Wandschalen 12 zwischen den Schlitzen 10 und dem Längsschlitz 7 und in äußere Wandschalen 13, die sich in Umfangsrichtung um den Schaft 2 herum bis zu den Schlitzen 10 auf der gegenüberliegenden Seite des Schafts 2 erstrecken. In axialer Richtung sind immer zwei Wandschalen 12, 13 hintereinander angeordnet, die sich zwischen den Verformungsgelenken 11 über die Länge der Schlitze 10 erstrecken. In Figur 2 sind Grenzen der Verformungsgelenke 11 und der Wandabschnitte 12, 13 mit Strichlinien angedeutet. Zu beachten ist, dass es sich dabei um Bereiche oder Abschnitte der Wand des rohrförmigen Schafts 2 des Dämmstoffdübels 1 handelt, die durch die Schlitze 7, 10 gebildet, allerdings nicht klar abgegrenzt sind und deren Lage sich nur ungefähr angeben lässt. Grundsätzlich kann der Schaft 2 Einkerbungen oder dgl. an den Verformungsgelenken 11 und/oder deren Grenzen aufweisen, um das Ausknicken zu erleichtern und Knicklinien, an denen die Wand des Schafts 2 knickt, genau bzw. genauer festzulegen, zwingend ist das jedoch nicht.

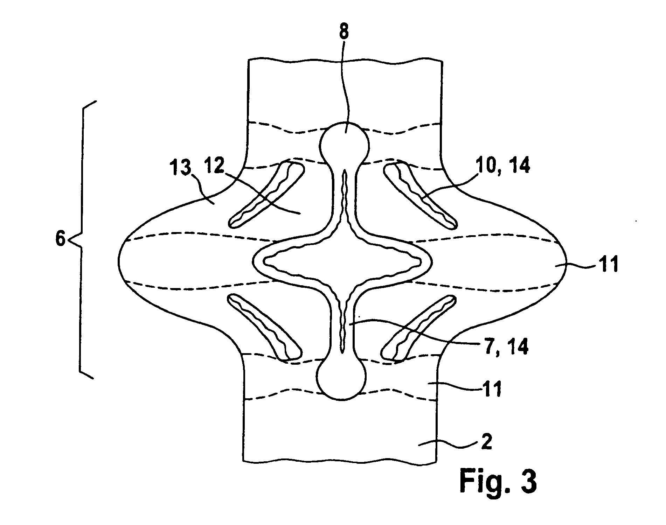

Wird der Schaft 2 des Dämmstoffdübels 1 beim Einbringen des nicht dargestellten, stiftartigen Spreizelements, also beispielsweise einer Nagelschraube, gestaucht, knicken die Wandschalen 12, 13, wie in Figur 3 dargestellt, nach Art von Kniehebeln nach außen aus. Dadurch verkürzt sich der Schaft 2 und der Halteteller 4 lässt sich in der zu befestigenden Dämmstoffplatte oder dgl. so versenken, dass er nicht über deren Oberfläche übersteht. Die Stauchung des Schafts 2 erfolgt nach Verankerung des Spreizbereichs 5 im Untergrund. Da die Stauchzone 6 nahe dem Spreizbereich 5 ist, bewegt sie sich axial nicht oder wenig.

Eine Stauchlänge, also die Verkürzung des Schafts 2 beim Stauchen, ist durch die axiale Erstreckung der Schlitze 7, 10, insbesondere die Länge des Längsschlitz 7, festgelegt, wobei die Stauchlänge kürzer als der Längsschlitz 7 lang ist (der Längsschlitz 7 wird beim Stauchen axial nicht auf Null verkürzt). Die Stauchlänge entspricht ungefähr einer axialen Höhe des Haltetellers 4.

Die Schlitze 7, 10 gehen nicht durch die Wand des Schafts 2 durch, sondern sind durch dünne Spritzhäute 14 geschlossen. Die Spritzhäute 14 sind dünnwandige Materialstellen, deren Dicke ein Bruchteil einer Wanddicke des Schafts 2 ist, und die beim Spritzgießen zugleich mit der Herstellung des Dämmstoffdübels 1 hergestellt sind. Beim Stauchen der Stauchzone 6 und Ausknicken der Wandschalen 12, 13 reißen die Spritzhäute 14 wie in Figur 3 zu sehen ist. Die Spritzhäute 14 verhindern, dass Bohrmehl in den Dämmstoffdübel 1 eindringt, das eine Reibung des stiftartigen Spreizelements im Schaft 2 erhöhen und dadurch das Einbringen des Spreizelements in den Dämmstoffdübel 1 erschweren würde. Im Bereich der Löcher 9 zur Abstützung des Kerns beim Spritzgießen ist keine Spritzhaut 14 vorhanden.

Durch die gegenüberliegende Anordnung der Schlitze 7, 10 sind zwei gegenüberliegende äußere Wandschalenpaare 13 gebildet, die beim Stauchen diametral nach außen ausknicken. Durch mehrfache, beispielsweise drei- oder vierfache Anordnung der Schlitze 7, 10 über den Umfang verteilt, kann die Stauchzone 6 mehr als zwei äußere Wandschalenpaare 13 aufweisen, die beim Stauchen des Schafts 2 nach Art von Kniehebeln in entsprechend viele Richtungen nach außen ausknicken.

### Bezugszeichenliste

### Dämmstoffdübel

- 1: Dämmstoffdübel
- 2: Schaft
- 3: hinterer Abschnitt
- 4: Halteteller
- 5: Spreizbereich
- 6: Stauchzone
- 7: Längsschlitz
- 8: Aufweitung
- 9: Loch
- 10: Schlitz
- 11: Verformungsgelenk
- 12: innere Wandschale
- 13: äußere Wandschale
- 14: Spritzhaut

## Patentansprüche

1. Dämmstoffdübel zur Befestigung einer Dämmstoffplatte oder dgl. an einem Untergrund, mit einem rohrförmigen Schaft (2), der eine Stauchzone (6) aufweist, und mit einem Spreizbereich (5), der durch Einbringen eines stiftförmigen Spreizelements aufspreizbar ist, wobei der Schaft (2) in der Stauchzone (6) Aussparungen (7, 10) aufweist, durch die Wandschalen (12, 13) gebildet sind, die durch Verformungsgelenke (11) nach Art von Kniehebeln miteinander und mit dem Schaft (2) verbunden sind und bei Stauchung des Schafts (2) ausknicken, **dadurch gekennzeichnet, dass** der Schaft (2) in der Stauchzone (6) ellipsenoder rautenförmig angeordnete Schlitze (10) als Ausnehmungen aufweist, die an gedachten Halbachsen der Ellipse bzw. an Ecken der Raute unterbrochen sind.

2. Dämmstoffdübel nach Anspruch 1, **dadurch gekennzeichnet, dass** sich die Wandschalen (12, 13) ein begrenztes Stück in Umfangsrichtung erstrecken und axial jeweils zwei Wandschalen (12, 13) hintereinander angeordnet sind.

3. Dämmstoffdübel nach Anspruch 1, **dadurch gekennzeichnet, dass** der Schaft (2) in der Stauchzone (6) mindestens zwei Längsschlitze (7) als Ausnehmungen aufweist, die axial in gleicher Höhe und in Umfangsrichtung verteilt angeordnet sind.

4. Dämmstoffdübel nach Anspruch 3, **dadurch gekennzeichnet, dass** die Längsschlitze (7) an ihren Enden Aufweitungen (8) aufweisen.

5. Dämmstoffdübel nach Anspruch 1, **dadurch gekennzeichnet, dass** die Stauchzone (6) nahe dem Spreizbereich (5) angeordnet ist.

6. Dämmstoffdübel nach Anspruch 1, **dadurch gekennzeichnet, dass** die Ausnehmungen (7, 10) durch Spritzhäute (14) gegen Bohrmehl verschlossen sind.

## Claims

1. Insulation fixing for fixing an insulation panel or the like to a substrate, having a tubular shank (2) which has a compression zone (6), and having an expansion region (5) which is expansible by introduction of a pin-like expander element, the shank (2) having in the compression zone (6) openings (7, 10) by means of which wall portions (12, 13) are formed, which wall portions are joined to one another and to the shank (2) by deformation joints (11) in a similar way to toggle joints and buckle outwards when the shank (2) is compressed, **characterized in that** the shank (2) has in the compression zone (6) slots (10) in the form of apertures arranged in the shape of an ellipse or lozenge, which slots are interrupted at notional semi-axes of the ellipse or at corners of the lozenge.

2. Insulation fixing according to claim 1, **characterized in that** the wall portions (12, 13) extend a limited way in the circumferential direction, and in each case two wall portions (12, 13) are arranged one after the other in the axial direction.

3. Insulation fixing according to claim 1, **characterized in that** the shank (2) has in the compression zone (6) at least two longitudinal slots (7) in the form of apertures arranged at the same height axially and distributed around the circumference.

4. Insulation fixing according to claim 3, **characterized in that** the longitudinal slots (7) have widened portions (8) at their ends.

5. Insulation fixing according to claim 1, **characterized in that** the compression zone (6) is arranged close to the expansion region (5).

6. Insulation fixing according to claim 1, **characterized in that** the apertures (7, 10) are closed against drill dust by injection-moulded skins (14).

## Revendications

1. Cheville pour matériau d'isolation, pour la fixation d'une plaque de matériau d'isolation ou analogue sur un support, avec un corps tubulaire (2) qui présente une zone d'écrasement (6), et avec une zone d'expansion (5) qui peut être expansée par l'introduction d'un élément d'expansion en forme de tige, sachant que le corps (2) présente dans la zone d'écrasement (6) des évidements (7, 10) par lesquels sont formées des coques de paroi (12, 13) qui sont reliées entre elles et au corps (2) par des articulations déformables (11) du genre genouillères et qui s'infléchissent vers l'extérieur lors de l'écrasement du corps (2), **caractérisée en ce que** le corps (2) présente, comme évidements dans la zone d'écrasement (6), des fentes (10) disposées en ellipse ou en losange qui sont interrompues au niveau des demi-axes imaginaires de l'ellipse ou respectivement au niveau des coins du losange.

2. Cheville pour matériau d'isolation selon la revendication 1, **caractérisée en ce que** les coques de paroi (12, 13) s'étendent sur une distance limitée en direction circonférentielle, et deux coques de paroi (12, 13) sont chaque fois disposées axialement l'une à la suite de l'autre.

3. Cheville pour matériau d'isolation selon la revendication 1, **caractérisée en ce que** le corps (2) présente, comme évidements dans la zone d'écrasement (6), au moins deux fentes longitudinales (7) qui sont disposées axialement à la même hauteur et en étant réparties en direction circonférentielle.

4. Cheville pour matériau d'isolation selon la revendication 3, **caractérisée en ce que** les fentes longitudinales (7) présentent à leurs extrémités des élargissements (8).

5. Cheville pour matériau d'isolation selon la revendication 1, **caractérisée en ce que** la zone d'écrasement (6) est disposée dans le voisinage de la zone d'expansion (5).

6. Cheville pour matériau d'isolation selon la revendication 1, **caractérisée en ce que** les évidements (7, 10) sont fermés vis-à-vis de la poussière de perçage par des membranes (14) moulées par injection.
